# EUROPEAN PATENT SPECIFICATION

(11) **EP 1 904 351 B1**
(45) Date of publication and mention of the grant of the patent: **30.03.2016**
(21) Application number: 06758034.0
(22) Date of filing: 06.07.2006
(51) Int. Cl.: B60T 7/00, B60T 8/1766

(54) **A SYSTEM AND A METHOD FOR STABILISING A VEHICLE COMBINATION**
SYSTEM UND VERFAHREN ZUR STABILISIERUNG EINER FAHRZEUGKOMBINATION
SYSTÈME ET PROCÉDÉ DE STABILISATION D UN ATTELAGE

(30) Priority: 11.07.2005 SE 0501657
(43) Date of publication of application: 02.04.2008
(73) Proprietor: VOLVO LASTVAGNAR AB, 405 08 Göteborg (SE)
(72) Inventor: SABELSTRÖM, Mats, 427 37 Billdal (SE); LARSSON, Lena, 426 74 Västra Frölunda (SE)
(74) Representative: Volvo Technology Corporation
(86) International application number: PCT/SE2006/000849
(87) International publication number: WO 2007/008150

(56) References cited:
- EP-A1- 0 575 936
- EP-A1- 0 653 340
- EP-A1- 0 919 445
- EP-A2- 0 941 905
- WO-A1-2004/041614
- DE-A1- 3 600 708
- DE-A1- 10 040 576
- DE-A1- 10 325 192
- DE-A1- 19 953 413
- GB-A- 2 353 340
- GB-A- 2 409 712
- US-A- 3 566 987
- US-A- 4 023 864
- US-A- 4 768 840
- US-A- 6 042 196
- US-B1- 6 499 814
- US-B1- 6 523 911
- US-B2- 6 498 977
- US-B2- 6 668 225

## Description

The present invention relates to a system and a method for stabilising a vehicle combination consisting of a towing motor vehicle and a towed vehicle. The towed vehicle comprises one trailer or a combination of trailers. A trailer can either be a drawbar trailer, also named full trailer, or a semi-trailer.

From EP 0 941 905 a system of such kind is known. In this system, a tractor vehicle is provided with a steering wheel sensor, a yaw rate sensor, a transverse acceleration sensor and/or an inflection angle sensor detecting the angle between the longitudinal axis of the tractor vehicle and the longitudinal axis of the trailer. At the tractor/trailer interface, braking pressure for braking the trailer wheels may be provided in response to the sensors in the event of the presence of a stability-critical driving status is detected.

In US 6,450,019 B1 another apparatus and method for stabilising a vehicle combination is described, wherein the inflection angle between the longitudinal axis of the tractor vehicle and the longitudinal axis of the trailer is determined and a comparison is performed as a function of the inflection angle variable and a comparison variable. An actuator arrangement is associated with the trailer with which a brake pressure can be established at one or more of the wheels of the trailer to re-establish a stability of the tractor/trailer combination.

These known systems are automatically re-establishing a stability if the tractor/trailer combination has become unstable, so-called "stretch braking". Previously, a manually operated separate trailer brake was installed, allowing the driver to use auxiliary trailer braking on the vehicle combination when releasing the accelerator pedal or when driving on slippery road conditions. But this caused a considerable wear on the trailer brakes, as the trailer brake was often used to decelerate the entire road train. Therefore such systems were abandoned and made illegal due to the adverse effect on road safety as the result of the manual trailer braking was that many trailers were driving around with worn brakes. The automatic systems are considered inadequate as they are quite complicated and expensive. In particular, as the tractors and trailers grow bigger in size to transport an increasing payload, the problem of instability of the vehicle combination will increase and with the known systems, the wear of the trailer brakes will also increase.

DE 100 40 576 A1 discloses a method for braking a vehicle. The brake force on a trailer is increased when braking a vehicle combination significantly above the brake force of the towing vehicle when the brake pedal exceeds a characteristic position.

EP 0 653 340 A1 discloses a method for braking a vehicle. There is no language to employing the trailer brakes during normal driving conditions for stabilising the vehicle combination.

US 4,768,840 A discloses a method and a system for braking a vehicle. The driver's braking demand is sensed and the braking effort distributed between individually controllable vehicle brake sites to achieve a balanced braking in case a low braking effort is requested and to achieve a proportional braking if a higher braking effort is requested.

EP 0 919 445 A1 discloses a method and a system for stabilizing a truck by asymmetrical braking wheels of a trailer.

On this background, it is an object of the present invention to provide a stabilising method and system for a vehicle combination providing an improved stability of the vehicle combination.

This object is achieved by a method and a system for stabilising a vehicle combination of a towing vehicle, such as a tractor or a truck, and a towed vehicle, such as at least one trailer or semi-trailer, where the system includes: a trailer brake system on the towed vehicle which may be operated together with a vehicle brake system on the towing vehicle as well as independent from said vehicle brake system; means for detecting at least one signal corresponding to at least one driving condition; means for computing the detected at least one signal corresponding to said at least one driving condition and comparing the at least one detected signal with a corresponding predetermined values representing a critical driving condition; a switch operable to allow independent operation of the trailer brake system in response to a detected critical driving condition; and a trailer braking actuation arrangement operable to automatically operating the trailer brake system in response to activation means by applying temporary braking actions on the towed vehicle. The driving condition detection includes detecting at least one of the following driving conditions:
(a) ambient temperature;
(b) road inclination;
(c) steering wheel angle;
(d) vehicle combination weight;
(e) auxiliary braking of the towing vehicle (1) with a braking torque above a predefined limit;
(f) vehicle combination speed;
(g) the braking balance between the towing vehicle and the towed vehicle.

By the present invention, a proactive stabilising trailer brake system is provided. Rather than sensing the actual relative position of the towing vehicle and trailer in the vehicle combination, the driving conditions are detected, and if the conditions are considered to be critical, e.g. a steep downhill road inclination, risk of slippery road conditions due to the ambient temperature, the trailer brake system can be activated. Hereby, the system can be used as a proactive system. The stabilising action is defined as ESP (Electronic Stability Programme) interventions that allow temporary trailer braking actions. These actions consist of short repeated trailer brake actuations that are strong enough to significantly affect the vehicle combination but not strong enough to cause significant trailer brake wear, fading or glazing problems. The computing means decide if a critical driving condition is detected and if so, allows the operating means (ESP) to perform automatic trailer braking actions. Hereby, a proactive stretch braking system for stabilising is achieved that can be defined as ESP interventions that (legally) allows temporary trailer braking actions. This is in particular advantageous for larger vehicle combinations which may be less stabile in some driving conditions.

The driving condition detection includes detecting one or more of the following driving conditions:
- Ambient temperature. If a risk of ice or snow on the road is present due to the ambient temperature, the system is informed of this.
- Road inclination. The computing could be adapted in such a manner that the operation means are only allowed activation if the inclination angle is a downhill inclination above a certain angle or percentage.
- Steering wheel angle. In order to avoid the separate trailer braking action to influence the driving path, a limitation in the activation of the operating means may be defined which is dependent on the steering wheel position.
- Vehicle combination weight. In order to apply a suitable amount of temporary trailer braking, it would be advantageous for the system to have information of the vehicle combination weight.
- Auxiliary braking of the tractor vehicle with a braking torque above a predefined limit, such as auxiliary brake usage, such as engine brake and/or retarder. This braking torque limit could also be temperature dependent.
- Vehicle combination speed. A limit to the minimum and maximum speed for the allowance of the trailer brake system could be defined to avoid adversely affecting the stability of the vehicle combination at high speed and to avoid constrains in parking manoeuvres at low or reverse speed.
- Braking balance between towing vehicle and trailer. This information can be obtained from the CFC (Coupling Force Control) function of the towing vehicle. An underbraked trailer, i.e. a trailer that is braked less than required, can cause a "jack-knife" situation. This situation would give a signal asking for a more powerful brake actuation of the trailer brake. An overbraked trailer, i.e. a trailer that is braked more than required, can cause a "trailer swing-out" situation. This situation would give a signal asking for less or no brake actuation of the trailer brake.

The computing of the detected signals determines if a critical driving condition is present and alerts the activation means. The independent operation of the trailer brake system may be automatically activated in response to the detected critical driving condition. Hereby, the driver does not need to activate the auxiliary trailer brake system. Alternatively, the independent operation of the trailer brake system may be activated by a driver operated activation switch in response to an indicator triggered by the detected critical driving condition. This indicator may be a audio, visual or audiovisual indicator in the driver compartment of the vehicle. If the driver must allow the ESP of activating the auxiliary trailer brake system, the driver can actively also decide not to do so, e.g. if the vehicle combination is reversed e.g. for parking or loading or unloading. The indicator and the activation switch may be integrated in a multiple function panel or provided as separate indicator lamps and switches.

In the following, the invention is described in more detail with reference to the drawings, in which:
- Figure 1: is a schematic view of a braking system according to the invention on a first vehicle combination;
- Figure 2: is a schematic view of a braking system according to the invention on a second vehicle combination;
- Figure 3: is a schematic illustration of the system according to the invention; and
- Figure 4: is a diagram showing the auxiliary trailer braking actuations according to the invention.

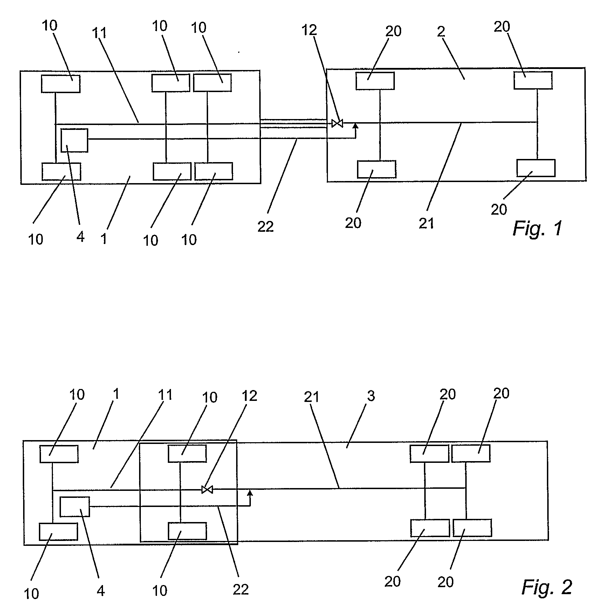

In figure 1, a first embodiment of the invention is shown, wherein the vehicle combination is a truck 1 with a draw bar trailer 2. The truck 1 has a braking system 11 for braking the wheels 10 on the tractor 1. Similarly, the trailer 2 is provided with a braking system 21 for braking the trailer wheels 20. The truck braking system 11 and the trailer braking system 21 are connected by a suitable coupling arrangement 12. An auxiliary trailer braking actuation arrangement 4 is provided which via a communication path 22 is connected to the trailer braking system 21. This communication path may be an electrical cable, a pneumatic or a hydraulic flow path.

In figure 2, a second embodiment of the invention is shown, wherein the vehicle combination is a tractor 1 with a semi-trailer 3 mounted thereon. The tractor 1 has a braking system 11 for braking the wheels 10 on the tractor 1. Similarly, the semi-trailer 3 is provided with a braking system 21 for braking the trailer wheels 20. The tractor braking system 11 and the trailer braking system 21 are connected by a suitable coupling arrangement 12. An auxiliary trailer braking actuation arrangement or operation means 4 is provided which via a communication path 22 is connected to the trailer braking system 21. This communication path may be an electrical cable, a pneumatic or a hydraulic flow path.

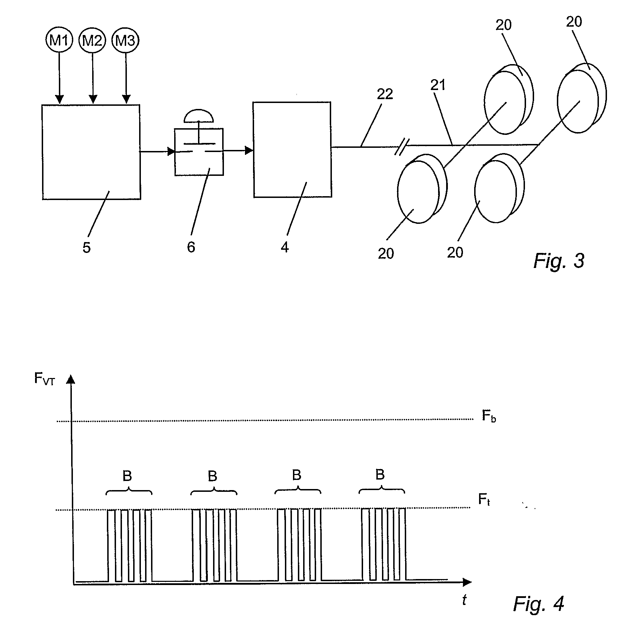

The system according to the invention is illustrated schematically in figure 3. A series of measurements M1, M2, M3 are fed to computing means 5 which determines if one or more of the measurements exceed a predetermined value, or a combination of the measurements exceed a threshold value representing a potentially critical road condition. If a potentially critical road condition is found present, the computing unit 5 allows switching means 6 to be operated, either manually or the computing unit switches on the switching means 6 automatically. The switching means 6 when switched on allows the ESP operation means 4 to perform separate braking actions B (see fig. 4) in the trailer brake system 21 by feeding brake impulses through the communication path 22 to the trailer brake system 21 for activating the brakes on the trailer wheels 20.

The measurements that are detected and fed to the computing unit 5 may be one or more measurements relating to parameters which may influence the driving condition of the vehicle combination.

In the following are listed some relevant parameters influencing the driving conditions, partly due to road conditions subjected to the vehicle combination, and that may determine the activation of the operation means 4 for allowing auxiliary trailer braking to take place. The parameters may be:

### Ambient temperature.

If a risk of ice or snow on the road is present due to the ambient temperature, the system is informed of this and if the temperature is below a predetermined limit the system may be allowed activation. A temperature below this threshold limit could itself alone cause the ESP operation means 4 to be allowed, or such allowability could be made dependent on other measurements as well.

### Road inclination.

The computing could be adapted in such a manner that the operation means 4 are only allowed activation if the inclination angle is a downhill inclination above a certain angle or percentage.

### Steering wheel angle.

In order to avoid the separate trailer braking action to influence the driving path, a limitation in the activation of the operating means may be defined which is dependent on the steering wheel position.

### Vehicle combination weight.

In order to apply a suitable amount of temporary trailer braking, it would be advantageous for the system to have information of the vehicle combination weight.

### Auxiliary braking/deceleration.

Auxiliary braking of the tractor vehicle with a braking torque above a predefined limit, such as auxiliary brake usage, such as engine brake and/or retarder, may be detected by measuring the acceleration and in particular the deceleration. This braking torque limit could also be temperature dependent or dependent on other parameters in order to allow for activation of the ESP operation means 4.

### Vehicle combination speed.

A limit to the minimum and maximum speed for the allowance of the trailer brake system could be defined to avoid adversely affecting the stability of the vehicle combination at high speed and to avoid constrains in parking manoeuvres at low or reverse speed.

### Braking balance between towing vehicle and trailer.

This information can be obtained from the CFC (Coupling Force Control) function of the towing vehicle. If the ratio between the braking torque of the towing vehicle and the braking torque of the trailer is unbalanced, the vehicle combination may be unstable. The ratio of the brake torque should then preferably be adjusted. An underbraked trailer, i.e. a trailer that is braked less than required, can cause a "jack-knife" situation. This situation would create a signal asking for a more powerful brake actuation of the trailer brake. An overbraked trailer, i.e. a trailer that is braked more than required, can cause a "trailer swing-out" situation. This situation would create a signal asking for less or no brake actuation of the trailer brake.

Measurements of many of these relevant parameters are already made in most electronic systems installed in trucks and tractors. Therefore, the system according to the invention is easy to implement. The system may be implemented during the design and manufacture of tractors or mounted subsequently on tractors, trucks and the like.

In the diagram in figure 4 is shown the braking force F_{VT} as a function of time t. As shown in the diagram, the braking actuations B consist of a series of repetitive brake impulses of a brake force level Fₜ which is strong enough to significantly affect the vehicle combination but not strong enough to cause trailer brake wear, fading or glazing problems. A braking action actuated in order to reduce speed of the vehicle combination and applied to both the tractor and the trailer is indicated by the dotted line F_{b} indicating that this brake force is higher than the proactive stabilising trailer brake actions.

By the invention, it is realised that the system may be applied to braking system that are both pneumatically, hydraulically or electrically operated.

In a further embodiment, a vehicle combination with a towing vehicle and two trailers is stabilised by the inventive system. The vehicle combination may e.g. consist of a tractor with a semi-trailer and an extra trailer coupled to the semi-trailer. This combination is used to make up for different length requirements in different states or regions. Another possible combination is a truck with two short trailers. In this embodiment, the system is adapted to start the braking actuation on the rearmost trailer when a critical driving condition is detected, in order to stabilise the vehicle combination. In this embodiment, it is possible to let the rearmost trailer brake operate independently, and also to let the front trailer brake operate independently of the vehicle brake but only when the rearmost trailer brake is actuated. In this way, the vehicle combination is stabilised from the rear of the combination.

Above, the invention is described with reference to some preferred embodiments. However, it is realised that other embodiments may be performed without departing from the scope of protection as defined by the accompanying claims.

## Claims

1. A system for stabilising a vehicle combination comprising a towing vehicle (1) and a towed vehicle (2, 3), said system including:
a trailer brake system (21) on the towed vehicle (2, 3) which may be operated together with the vehicle brake system (11) on the towing vehicle (1) as well as independent from said vehicle brake system (11);
means for detecting at least one signal corresponding to at least one driving condition, the driving condition detection includes detecting at least one of the following driving conditions:
(a) ambient temperature;
(b) road inclination;
(c) steering wheel angle;
(d) vehicle combination weight;
(e) auxiliary braking of the towing vehicle (1) with a braking torque above a predefined limit;
(f) vehicle combination speed;
(g) the braking balance between the towing vehicle and the towed vehicle;
means (5) for computing said at least one detected signal and comparing said at least one detected signal with a corresponding predetermined value representing a potentially critical driving condition;
**characterized by**
a switch operable to allow independent operation of the trailer brake system (21) in response to a detected potentially critical driving condition; and
a trailer braking actuation arrangement (4) operable to automatically operating the trailer brake system (21) in response to the activation means by applying temporary ESP interventions consisting of short repeated trailer brake actuations of repetitive brake impulses of a brake force level (Fₜ) strong enough to significantly affect the vehicle combination but not strong enough to cause significant trailer brake wear, fading or glazing problems, wherein a brake force level (F_{b}) for reducing speed of the vehicle (1, 2, 3) is higher than the proactive stabilising trailer brake actions on the towed vehicle (2, 3) so as to achieve a proactive stabilization of the vehicle combination.

2. A system according to claim 1, wherein the computing means (5) receiving the detected signals determines if a critical driving condition is present and alerts the switch.

3. A system according to any preceding claim, wherein the switch automatically activates the trailer braking actuation arrangement (4).

4. A system according to any preceding claim, wherein the switch includes an indicator and a driver operated activation switch (6) for activating the trailer braking actuation arrangement (4).

5. A system according to claim 4, wherein said indicator is an audio, visual or audiovisual indicator in the driver compartment of the towing vehicle (1).

6. A system according to any preceding claim, wherein the trailer braking actuation arrangement (4) automatically provides a series of short repeated trailer brake actuations when the trailer brake system (21) is activated by the switch.

7. A system according to any preceding claim, wherein the towed vehicle (2, 3) consists of a single trailer (2, 3).

8. A system according to any of claims 1 to 6, wherein the towed vehicle (2, 3) comprises a plurality of trailers (2).

9. A method of stabilising a vehicle combination of a towing vehicle (1) and a towed vehicle (2, 3), wherein a trailer brake system (21) on the towed vehicle (2, 3) may be operated together with a vehicle brake system (11) on the towing vehicle (1) as well as independent from said vehicle brake system (11), said method including the steps of:
detecting at least one signal corresponding to at least one driving condition, the driving condition detection includes detecting at least one of the following driving conditions:
(a) ambient temperature;
(b) road inclination;
(c) steering wheel angle;
(d) vehicle combination weight;
(e) auxiliary braking of the towing vehicle (1) with a braking torque above a predefined limit;
(f) vehicle combination speed;
(g) the braking balance between the towing vehicle and the towed vehicle;
computing said at least one detected signal and comparing said at least one detected signal with a corresponding predetermined values representing a potentially critical driving condition;
**characterized by**
allowing independent operation of the trailer brake system (21) in response to a detected potentially critical driving condition; and
automatically operating the trailer brake system (21) in response to the activation means by applying temporary braking actions on the towed vehicle (2, 3) so as to achieve a proactive stabilization of the vehicle combination, wherein the braking actions are ESP interventions consisting of short repeated trailer brake actuations of repetitive brake impulses of a brake force level (Fₜ) strong enough to significantly affect the vehicle combination but not strong enough to cause significant trailer brake wear, fading or glazing problems, wherein a brake force level (F_{b}) for reducing speed of the vehicle (1, 2, 3) is higher than the proactive stabilising trailer brake actions.

10. A method according to claim 9, whereby the computing of the detected signals determines if a critical driving condition is present and alerts the activation means.

11. A method according to any of claims 9-10, whereby the independent operation of the trailer brake system (21) is automatically activated in response to the detected critical driving condition.

12. A method according to any of claims 9-11, whereby the independent operation of the trailer brake system (21) may be activated by a driver operated activation switch (6) in response to an indicator triggered by the detected critical driving condition.

13. A method according to claim 12, whereby said indicator is an audio, visual or audiovisual indicator in the driver compartment of the vehicle.

14. A method according to any of claims 9-11, whereby the independent operation of the trailer brake system (21) automatically provides a series of short repeated trailer brake actuations when the trailer brake system (21) is allowed activation.

15. A computer program comprising program code for carrying out all the steps in any of claims 9-14, when said program is executed by a computer (5).

16. A computer program product comprising program code, stored on a computer-readable medium, for carrying out the method in any of claims 9-14, when said program is executed by a computer (5).

## Patentansprüche

1. System zur Stabilisierung einer Fahrzeugkombination, die ein ziehendes Fahrzeug (1) und ein gezogenes Fahrzeug (2, 3) umfasst, wobei das System aufweist:
- ein Hängerbremssystem (21) an dem gezogenen Fahrzeug (2, 3), das zusammen mit dem Fahrzeugbremssystem (11) an dem ziehenden Fahrzeug (1) sowie unabhängig von dem Fahrzeugbremssystem (11) betrieben werden kann,
- Einrichtungen zur Erfassung wenigstens eines Signals, das wenigstens einem Fahrzustand entspricht, wobei die Fahrzustandserfassung die Erfassung wenigstens eines der folgenden Fahrzustände umfasst:
(a) Umgebungstemperatur,
(b) Straßenneigung,
(c) Lenkradwinkel,
(d) Fahrzeugkombinationsgewicht,
(e) Hilfsbremsen des ziehenden Fahrzeugs (1) mit einem Bremsmoment oberhalb einer vorherbestimmten Grenze,
(f) Fahrzeugkombinationsgeschwindigkeit,
(g) Bremsbalance zwischen dem ziehenden Fahrzeug und dem gezogenen Fahrzeug,
- Einrichtungen (5) zur Berechnung des wenigstens einen erfassten Signals und zum Vergleich des wenigstens einen erfassten Signals mit einem entsprechenden vorherbestimmten Wert, der einen potentiell kritischen Fahrzustand repräsentiert,
**gekennzeichnet durch**
- einen Schalter, der betätigbar ist, um einen unabhängigen Betrieb des Hängerbremssystems (21) in Ansprechung auf einen erfassten potentiell kritischen Fahrzustand zu ermöglichen, und
- eine Hängerbremsbetätigungsanordnung (4), die zur automatischen Betätigung des Hängerbremssystems (21) in Ansprechung auf die Aktivierungseinrichtung **durch** Anwendung temporären ESP-Eingreifens betätigbar ist, das aus kurzen wiederholten Hängerbremsbetätigungen von wiederholten Bremsimpulsen mit einer Bremskrafthöhe (Fₜ) besteht, die stark genug ist, um die Fahrzeugkombination signifikant zu beeinflussen, jedoch nicht stark genug ist, um Abnutzungs-, Fadings- oder Verglasungs-Probleme der Anhängerbremse zu verursachen, wobei eine Bremskrafthöhe (F_{b}) zur Verringerung der Geschwindigkeit des Fahrzeugs (1, 2, 3) höher ist als die proaktiven stabilisierenden Hängerbremsvorgänge an dem gezogenen Fahrzeug (2, 3), um eine proaktive Stabilisierung der Fahrzeugkombination zu erreichen.

2. System nach Anspruch 1, wobei die Recheneinrichtung (5), die die erfassten Signale empfängt, bestimmt, ob ein kritischer Fahrzustand vorhanden ist, und den Schalter in Alarmbereitschaft versetzt.

3. System nach irgendeinem vorhergehenden Anspruch, wobei der Schalter automatisch die Hängerbremsbetätigungsanordnung (4) aktiviert.

4. System nach irgendeinem vorhergehenden Anspruch, wobei der Schalter eine Anzeigeeinrichtung und einen von einem Fahrer betätigten Aktivierungsschalter (6) zur Aktivierung der Hängerbremsbetätigungsanordnung (4) aufweist.

5. System nach Anspruch 4, wobei die Anzeigeeinrichtung eine Audio-, visuelle oder audiovisuelle Anzeigeeinrichtung in der Fahrerkabine des ziehenden Fahrzeugs (1) ist.

6. System nach irgendeinem vorhergehenden Anspruch, wobei die Hängerbremsbetätigungsanordnung (4) automatisch eine Serie von kurzen wiederholten Hängerbremsbetätigungen vorsieht, wenn das Hängerbremssystem (21) durch den Schalter aktiviert ist.

7. System nach irgendeinem vorhergehenden Anspruch, wobei das gezogene Fahrzeug (2, 3) aus einem einzigen Hänger (2, 3) besteht.

8. System nach irgendeinem der Ansprüche 1 bis 6, wobei das gezogene Fahrzeug (2, 3) eine Vielzahl von Anhängern (2) umfasst.

9. Verfahren zur Stabilisierung einer Fahrzeugkombination eines ziehenden Fahrzeugs (1) und eines gezogenen Fahrzeugs (2, 3), wobei ein Hängerbremssystem (21) an dem gezogenen Fahrzeug (2, 3) zusammen mit einem Fahrzeugbremssystem (11) an dem ziehenden Fahrzeug (1) sowie unabhängig von dem Fahrzeugbremssystem (11) betrieben werden kann, wobei das Verfahren die Schritte umfasst:
- Erfassen wenigstens eines Signals, das wenigstens einem Fahrzustand entspricht, wobei die Fahrzustandserfassung die Erfassung wenigstens eines der folgenden Fahrzustände umfasst:
(a) Umgebungstemperatur,
(b) Straßenneigung,
(c) Lenkradwinkel,
(d) Fahrzeugkombinationsgewicht,
(e) Hilfsbremsen des ziehenden Fahrzeugs (1) mit einem Bremsmoment oberhalb einer vorherbestimmten Grenze,
(f) Fahrzeugkombinationsgeschwindigkeit,
(g) Bremsbalance zwischen dem ziehenden Fahrzeug und dem gezogenen Fahrzeug,
- Berechnung des wenigstens einen erfassten Signals und Vergleich des wenigstens einen erfassten Signals mit einem entsprechenden vorherbestimmten Wert, der einen potentiell kritischen Fahrzustand repräsentiert,
**gekennzeichnet durch**
- Erlauben eines unabhängigen Betriebs des Hängerbremssystems (21) in Ansprechung auf einen erfassten potentiell kritischen Fahrzustand, und
- automatische Betätigung des Hängerbremssystems (21) in Ansprechung auf die Aktivierungseinrichtung **durch** Anwendung temporärer Bremsvorgänge an dem gezogenen Fahrzeug (2, 3), um eine proaktive Stabilisierung der Fahrzeugkombination zu erreichen, wobei die Bremsvorgänge ein ESP-Eingreifen sind, das aus kurzen wiederholten Hängerbremsbetätigungen von wiederholten Bremsimpulsen mit einer Bremskrafthöhe (Fₜ) besteht, die stark genug ist, um die Fahrzeugkombination signifikant zu beeinflussen, jedoch nicht stark genug ist, um signifikante Abnutzungs-, Fadings- oder Verglasungs-Probleme der Anhängerbremse zu verursachen, wobei eine Bremskrafthöhe (F_{b}) zur Verringerung der Geschwindigkeit des Fahrzeugs (1, 2, 3) höher ist als die proaktiven stabilisierenden Hängerbremsvorgänge.

10. Verfahren nach Anspruch 9, wobei die Berechnung der erfassten Signale bestimmt, ob ein kritischer Fahrzustand vorhanden ist, und die Aktivierungseinrichtung in Alarmbereitschaft versetzt.

11. Verfahren nach irgendeinem der Ansprüche 9-10, wobei der unabhängige Betrieb des Hängerbremssystems (21) automatisch in Ansprechung auf den erfassten kritischen Fahrzustand aktiviert wird.

12. Verfahren nach irgendeinem der Ansprüche 9-11, wobei der unabhängige Betrieb des Hängerbremssystems (21) durch einen vom Fahrer betätigten Aktivierungsschalter (6) in Ansprechung auf eine Anzeigeeinrichtung aktiviert werden kann, die durch den erfassten kritischen Fahrzustand ausgelöst wird.

13. Verfahren nach Anspruch 12, wobei Anzeigeeinrichtung eine Audio-, visuelle oder audiovisuelle Anzeigeeinrichtung in der Fahrerkabine des Fahrzeugs ist.

14. Verfahren nach irgendeinem der Ansprüche 9-11, wobei der unabhängige Betrieb des Hängerbremssystems (21) automatisch eine Serie von kurzen wiederholten Hängerbremsbetätigungen vorsieht, wenn das Hängerbremssystem (21) aktiviert werden kann.

15. Computerprogramm, das einen Programmcode zur Ausführung aller Schritte in irgendeinem der Ansprüche 9-14 umfasst, wobei das Programm durch einen Computer (5) ausgeführt wird.

16. Computerprogrammerzeugnis, das einen Programmcode umfasst, der auf einem computerlesbaren Medium gespeichert ist, zur Ausführung des Verfahren nach irgendeinem der Ansprüche 9-14, wenn das Programm durch einen Computer ausgeführt wird.

## Revendications

1. Système pour stabiliser un ensemble de véhicules comprenant un véhicule tracteur (1) et un véhicule tracté (2, 3), ledit système comportant :
un système de frein de remorque (21) sur le véhicule tracté (2, 3) qui peut fonctionner conjointement avec le système de frein de véhicule (11) sur le véhicule tracteur (1) ainsi qu'indépendamment dudit système de frein de véhicule (11) ;
un moyen pour détecter au moins un signal correspondant à au moins une condition de conduite, la détection de condition de conduite comporte le fait de détecter au moins l'une des conditions de conduite suivantes :
(a) une température ambiante ;
(b) l'inclinaison de route ;
(c) l'angle de volant de direction ;
(d) le poids d'ensemble de véhicules ;
(e) le freinage auxiliaire du véhicule tracteur (1) avec un couple de freinage au-dessus d'une limite prédéfinie ;
(f) la vitesse d'ensemble de véhicules ;
(g) l'équilibre de freinage entre le véhicule tracteur et le véhicule tracté ;
un moyen (5) pour calculer ledit au moins un signal détecté et pour comparer ledit au moins un signal détecté avec une valeur prédéterminée correspondante représentant une condition de conduite potentiellement critique ;
**caractérisé par**
un commutateur pouvant fonctionner pour permettre un fonctionnement indépendant du système de frein de remorque (21) en réponse à une condition de conduite potentiellement critique détectée ; et
un agencement d'actionnement de freinage de remorque (4) pouvant fonctionner pour faire fonctionner automatiquement le système de frein de remorque (21) en réponse au moyen d'activation en appliquant des interventions ESP temporaires constituées de courts actionnements de frein de remorque répétés d'impulsions de frein répétitives d'un niveau de force de freinage (Fₜ) assez fort pour affecter de manière significative l'ensemble de véhicules, mais pas assez fort pour causer des problèmes importants d'usure, d'évanouissement ou de glaçage de frein de remorque, où un niveau de force de freinage (F_{b}) pour réduire la vitesse du véhicule (1, 2, 3) est supérieur aux actions de frein de remorque de stabilisation proactive sur le véhicule tracté (2, 3) afin d'accomplir une stabilisation proactive de l'ensemble de véhicules.

2. Système selon la revendication 1, dans lequel le moyen de calcul (5) recevant les signaux détectés détermine si une condition de conduite critique est présente et avertit le commutateur.

3. Système selon l'une des revendications précédentes, dans lequel le commutateur active automatiquement l'agencement d'actionnement de freinage de remorque (4).

4. Système selon l'une des revendications précédentes, dans lequel le commutateur comporte un indicateur et un commutateur d'activation actionné par un conducteur (6) pour activer l'agencement d'actionnement de freinage de remorque (4).

5. Système selon la revendication 4, dans lequel ledit indicateur est un indicateur audio, visuel ou audiovisuel dans le poste de conduite du véhicule tracteur (1).

6. Système selon l'une des revendications précédentes, dans lequel l'agencement d'actionnement de freinage de remorque (4) fournit automatiquement une série de courts actionnements de frein de remorque répétés lorsque le système de frein de remorque (21) est activé par le commutateur.

7. Système selon l'une des revendications précédentes, dans lequel le véhicule tracté (2, 3) est constitué d'une seule remorque (2, 3).

8. Système selon l'une des revendications 1 à 6, dans lequel le véhicule tracté (2, 3) comprend une pluralité de remorques (2).

9. Procédé de stabilisation d'un ensemble de véhicules d'un véhicule tracteur (1) et d'un véhicule tracté (2, 3), dans lequel un système de frein de remorque (21) sur le véhicule tracté (2, 3) peut fonctionner conjointement avec un système de frein de véhicule (11) sur le véhicule tracteur (1) aussi bien qu'indépendamment dudit système de frein de véhicule (11), ledit procédé comportant les étapes qui consistent :
à détecter au moins un signal correspondant à au moins une condition de conduite, la détection de condition de conduite comporte le fait de détecter au moins l'une des conditions de conduite suivantes :
(a) une température ambiante ;
(b) l'inclinaison de route ;
(c) l'angle de volant de direction ;
(d) le poids d'ensemble de véhicules ;
(e) le freinage auxiliaire du véhicule tracteur (1) avec un couple de freinage au-dessus d'une limite prédéfinie ;
(f) la vitesse d'ensemble de véhicule ;
(g) l'équilibre de freinage entre le véhicule tracteur et le véhicule tracté ;
à calculer ledit au moins un signal détecté et à comparer ledit au moins un signal détecté avec une valeur prédéterminée correspondante représentant une condition de conduite potentiellement critique ;
**caractérisé par** le fait
de permettre un fonctionnement indépendant du système de frein de remorque (21) en réponse à une condition de conduite potentiellement critique détectée ; et
de faire fonctionner automatiquement le système de frein de remorque (21) en réponse au moyen d'activation en appliquant des actions de freinage temporaires sur le véhicule tracté (2, 3) afin d'accomplir une stabilisation proactive de l'ensemble de véhicules, où les actions de freinage sont des interventions ESP constituées de courts actionnements de frein de remorque répétés d'impulsions de frein répétitives d'un niveau de force de freinage (Fₜ) assez fort pour affecter de manière significative l'ensemble de véhicules, mais pas assez fort pour causer des problèmes importants d'usure, d'évanouissement ou de glaçage de frein de remorque, où un niveau de force de freinage (F_{b}) pour réduire la vitesse du véhicule (1, 2, 3) est supérieur aux actions de frein de remorque de stabilisation proactive.

10. Procédé selon la revendication 9, par lequel le calcul des signaux détectés détermine si une condition de conduite critique est présente et avertit le moyen d'activation.

11. Procédé selon l'une des revendications 9 à 10, par lequel le fonctionnement indépendant du système de frein de remorque (21) est automatiquement activé en réponse à la condition de conduite critique détectée.

12. Procédé selon l'une des revendications 9 à 11, par lequel le fonctionnement indépendant du système de frein de remorque (21) peut être activé par un commutateur d'activation actionné par un conducteur (6) en réponse à un indicateur déclenché par la condition de conduite critique détectée.

13. Procédé selon la revendication 12, par lequel ledit indicateur est un indicateur audio, visuel ou audiovisuel dans le poste de conduite du véhicule.

14. Procédé selon l'une des revendications 9 à 11, par lequel le fonctionnement indépendant du système de frein de remorque (21) fournit automatiquement une série de courts actionnements de frein de remorque répétés lorsque le système de frein de remorque (21) est autorisé à être activé.

15. Programme informatique comprenant un code de programme pour réaliser toutes les étapes dans l'une des revendications 9 à 14, lorsque ledit programme est exécuté par un ordinateur (5).

16. Produit de programme informatique comprenant un code de programme, stocké sur un support lisible par ordinateur, pour réaliser le procédé dans l'une des revendications 9 à 14, lorsque ledit programme est exécuté par un ordinateur (5).
